# EUROPÄISCHE PATENTSCHRIFT

(11) **EP 3 558 734 B1**
(45) Veröffentlichungstag und Bekanntmachung des Hinweises auf die Patenterteilung: **07.04.2021**
(21) Anmeldenummer: 17826418.0
(22) Anmeldetag: 20.11.2017
(51) Int. Cl.: F16H 3/54, F16H 48/11, B60K 1/00

(54) **GETRIEBEVORRICHTUNG FÜR EIN KRAFTFAHRZEUG**
TRANSMISSION DEVICE FOR A MOTOR VEHICLE
ENSEMBLE BOÎTE DE VITESSES CONÇU POUR UN VÉHICULE AUTOMOBILE

(30) Priorität: 21.12.2016 DE 102016015181; 20.05.2017 DE 102017004931
(43) Veröffentlichungstag der Anmeldung: 30.10.2019
(73) Patentinhaber: Daimler AG, 70372 Stuttgart (DE)
(72) Erfinder: SCHILDER, Tobias, 70794 Filderstadt (DE); HAERTER, Tobias, 70174 Stuttgart (DE); RIEDL, Klaus, 72074 Tübingen (DE)
(74) Vertreter: JENSEN & SON
(86) Internationale Anmeldenummer: PCT/EP2017/001360
(87) Internationale Veröffentlichungsnummer: WO 2018/114029

(56) Entgegenhaltungen:
- WO-A1-2011/082707
- DE-A1-102007 021 359
- JP-A- H05 116 549

## Beschreibung

Die Erfindung betrifft eine Getriebevorrichtung für ein Kraftfahrzeug und einen elektrischen Antriebsstrang mit der Getriebevorrichtung.

Aus der WO 2011/082707 A1, der DE 10 2007 021 359 A1, der JP H05 116549 A sind bereits elektrische Antriebsstränge mit Getriebevorrichtungen bekannt.

Aus der DE 10 2015 104 778 A1 ist bereits Getriebevorrichtung für ein Kraftfahrzeug mit einem Achsgetriebe, mit einem Planetenradsatz, welcher zumindest ein erstes von einem Hohlrad gebildetes Getriebeelement, zumindest ein zweites Getriebeelement und zumindest ein drittes Getriebeelement aufweist, und mit zumindest einem Bremselement, welches zu einem Festbremsen zumindest eines der Getriebeelemente des Planetenradsatzes vorgesehen ist, bekannt.

Aus der gattungsgemäßen DE 694 05 202 T2 ist eine Getriebevorrichtung für ein Kraftfahrzeug bekannt, mit einem Achsgetriebe, mit einem Planetenradsatz, welcher ein Hohlrad, das zu einer Einleitung eines Antriebsmoments eine Außenverzahnung aufweist, zumindest ein zweites Getriebeelement und zumindest ein drittes Getriebeelement aufweist, das mit dem Achsgetriebe gekoppelt ist, wobei das Achsgetriebe radial innerhalb des Planetenradsatzes angeordnet ist

Ferner sind bei Queraggregaten für Kraftfahrzeuge in der Regel ein Achsgetriebe, insbesondere ein Kugeldifferential, in ein Finaldriverad integriert. Damit ist definiert, dass zwischen einem Finaldrive-Ritzel und dem Achsgetriebe nur eine Übersetzung untergebracht ist. Soll auf der Achse eine Range-Gruppe für beispielsweise einen low und high Bereich integriert werden, erfolgt dies stets über eine nachgeschaltete PTU.

Der Erfindung liegt insbesondere die Aufgabe zugrunde, vorteilhaft kompakt eine vorteilhafte Mehrgängigkeit in einen bestehenden Bauraum des Achsgetriebes und um das Achsgetriebe unterzubringen. Sie wird durch eine Getriebevorrichtung entsprechend dem Anspruch 1 sowie durch einen elektrischen Antriebsstrang entsprechend dem Anspruch 11 gelöst. Weiterbildungen der Erfindung ergeben sich aus den abhängigen Ansprüchen.

Die Erfindung geht aus von einer Getriebevorrichtung für ein Kraftfahrzeug, mit einem Achsgetriebe, mit einem Planetenradsatz, welcher zumindest ein erstes von einem ersten Hohlrad gebildetes Getriebeelement, das zu einer Einleitung eines Antriebsmoments eine Außenverzahnung aufweist, zumindest ein zweites Getriebeelement und zumindest ein drittes Getriebeelement aufweist, das mit dem Achsgetriebe gekoppelt ist, und mit zumindest einem Bremselement, welches zu einem Festbremsen zumindest eines der Getriebeelemente des Planetenradsatzes vorgesehen ist. Vorzugsweise ist das Bremselement zu einem Festbremsen des zweiten Getriebeelementes des Planetenradsatzes vorgesehen.

Unter dem "Planetenradsatz" soll dabei insbesondere eine Einheit mit einem ersten Sonnenrad, dem ersten Hohlrad und mit zumindest einem, von einem ersten Planetenradträger auf einer Kreisbahn um das Sonnenrad geführten Planetenrad verstanden werden.

Es wird vorgeschlagen, dass das Achsgetriebe als ein Planetendifferential mit einem zweiten Hohlrad, einem zweiten Sonnenrad und einem zweiten Planetenradträger ausgebildet ist, welches radial innerhalb des Planetenradsatzes angeordnet ist und in einer Zahnradebene mit dem Planetenradsatz angeordnet ist.

Mit der Zahnradebene ist eine Ebene gemeint, welche senkrecht zu den Drehachsen von Rädern der Zahnradebene angeordnet ist. Die zu der Zahnradebene gehörigen Räder sind das erste Sonnenrad, das erste Hohlrad, die Planetenräder des ersten Planetenträgers, das zweite Sonnenrad, Planetenräder des zweiten Planetenradträgers und das zweite Hohlrad. Dabei sind die Drehachsen dieser zu der Zahnradebene gehörigen Räder parallel angeordnet. Mit dem Merkmal, dass das Planetendifferential in der Zahnradebene mit dem Planetenradsatz angeordnet ist, ist gemeint, dass die Zahnradebene das erste Sonnenrad, das erste Hohlrad, die Planetenräder des ersten Planetenträgers, das zweite Sonnenrad, Planetenräder des zweiten Planetenradträgers und das zweite Hohlrad schneidet.

Dadurch kann ein sehr vorteilhaftes Gesamtsystem aus einem den Planetenradsatz aufweisenden Mehrganggetriebe und dem Achsgetriebe dargestellt werden. Insbesondere kann vorteilhaft kompakt eine Mehrgängigkeit in einen bestehenden Bauraum um das Achsgetriebe untergebracht werden. Es kann insbesondere vorteilhaft eine Range-Gruppe vor dem Achsgetriebe, insbesondere in ein Finaldriverad, integriert werden. Damit können im Bedarfsfall alle Gänge ins Kurze verschoben werden, was zu höheren Abtriebsmomenten führt. Dies ist beispielsweise im Kriechbetrieb für die Motorbetriebspunkte und die Kühlung enscheidend. Ferner kann dadurch auch eine Schaltelementbelastung gering gehalten werden. Dadurch kann insbesondere auf eine nachgeschaltete PTU verzichtet werden. Ferner kann insbesondere dadurch Bauraum eingespart werden, dass statt beispielsweise eines Kugeldifferentials ein Planetendifferential verwendet wird, über und/oder um welches sich vorteilhaft ein Planetenradsatz stapeln lässt. Hierdurch kann ein vorteilhaft kompakter Aufbau erreicht werden. Unter einem "Achsgetriebe" soll in diesem Zusammenhang insbesondere ein Getriebe eines Kraftfahrzeugs verstanden werden, welches dazu vorgesehen ist, eine Kraft einer Antriebseinheit des Kraftfahrzeugs auf die Achse der Antriebsräder des Kraftfahrzeugs zu übertragen. Vorzugsweise ist das Achsgetriebe dazu vorgesehen, eine Kraft von dem Getriebe auf die Welle der Antriebsräder des Kraftfahrzeugs zu übertragen. Vorzugsweise ist das Achsgetriebe beispielsweise von einem Differentialgetriebe gebildet.

Vorteilhafterweise weist der Planetenradsatz genau ein Standübersetzungsverhältnis auf. Ferner soll in diesem Zusammenhang unter einem "Bremselement" insbesondere eine Schalteinheit verstanden werden, die wirkungsmäßig zwischen einem Planetenradsatz und einem Getriebegehäuse, insbesondere zwischen zumindest einem Getriebeelement des Planetenradsatzes und dem Getriebegehäuse, angeordnet ist und die dazu vorgesehen ist, ihr drehbares Kopplungselement, das in einem geöffneten Zustand unabhängig von dem Getriebegehäuse verdrehbar ist, in einem geschlossenen Zustand mit ihrem drehfest mit dem Getriebegehäuse verbundenen Kopplungselement drehfest zu verbinden. Vorzugsweise ist das drehbare Kopplungselement permanent drehfest mit dem Getriebeelement des Planetenradsatzes verbunden. Unter "drehfest verbunden" soll insbesondere eine Verbindung verstanden werden, bei der ein Leistungsfluss über eine vollständige Umdrehung gemittelt mit einem unveränderten Drehmoment, einer unveränderten Drehrichtung und/oder einer unveränderten Drehzahl übertragen wird. Unter einem "Planetendifferential" soll in diesem Zusammenhang insbesondere ein Achsgetriebe, insbesondere ein Differentialgetriebe, verstanden werden, welches zumindest einen Planetenradsatz aufweist, der dazu vorgesehen ist, eine Kraft einer Antriebseinheit des Kraftfahrzeugs auf die Achse der Antriebsräder des Kraftfahrzeugs zu übertragen. Vorzugsweise ist der Planetenradsatz dazu vorgesehen, eine Kraft von dem Getriebe direkt auf die Wellen der Antriebsräder des Kraftfahrzeugs zu übertragen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Getriebevorrichtung ein Verblockungselement aufweist, welches zu einem Verblocken von zumindest zwei Getriebeelementen des Planetenradsatzes miteinander vorgesehen ist. Vorzugsweise ist das Verblockungselement zu einem Verblocken von genau zwei Getriebeelementen des Planetenradsatzes miteinander vorgesehen. Bevorzugt ist das Verblockungselement von einer Kupplung gebildet. Besonders bevorzugt ist das Verblockungselement von einer Kupplung gebildet, welche zumindest einen Verblockungszustand aufweist. Dadurch kann insbesondere eine vorteilhaft kompakte Anordnung der Getriebevorrichtung bei einer vorteilhaften Schaltbarkeit erreicht werden. Es kann insbesondere eine vorteilhafte Mehrgängigkeit erreicht werden. Unter einem "Verblockungselement" soll in diesem Zusammenhang insbesondere eine Kupplung verstanden werden, welche zumindest einen Verblockungszustand aufweist. Unter einer "Kupplung" soll in diesem Zusammenhang insbesondere eine Schalteinheit verstanden werden, die in einem Leistungsfluss zwischen zwei Planetenradsätzen oder zwischen zumindest zwei Getriebeelementen des Planetenradsatzes angeordnet ist und die dazu vorgesehen ist, ihre zwei drehbar angeordneten Kopplungselemente, die in einem geöffneten Zustand unabhängig voneinander verdrehbar sind, in einem geschlossenen Zustand drehfest miteinander zu verbinden. Vorzugsweise ist jedes Kopplungselement mit jeweils einem Getriebeelement permanent drehfest verbunden.

Des Weiteren wird vorgeschlagen, dass das als Planetendifferential ausgebildete Achsgetriebe einen Doppelplaneten aufweist. Vorzugsweise ist der Planetenradsatz des Planetendifferentials daher als Doppelplanetenradsatz ausgebildet. Dadurch kann insbesondere ein vorteilhaftes als Planetendifferential ausgebildetes Achsgetriebe bereitgestellt werden.

Es wird ferner vorgeschlagen, dass das dritte Getriebeelement des Planetenradsatzes von Planetenradträger gebildet ist und permanent drehfest mit dem Hohlrad des Achsgetriebes verbunden ist. Dadurch kann insbesondere eine vorteilhaft kompakte Anordnung der Getriebevorrichtung erreicht werden. Ferner kann dadurch insbesondere eine vorteilhafte Momenteneinleitung auf das Achsgetriebe erreicht werden.

Es wird weiter vorgeschlagen, dass das Verblockungselement zu einem Verblocken des ersten, als Hohlrad ausgebildeten Getriebeelements des Planetenradsatzes und des dritten, als Planetenradträger ausgebildeten Getriebeelements des Planetenradsatzes vorgesehen ist. Vorzugsweise ist ein Kopplungselement des Verblockungselements permanent drehfest mit dem ersten Getriebeelement verbunden und ein Kopplungselement des Verblockungselements permanent drehfest mit dem dritten Getriebeelement verbunden. Dadurch kann mittels dem Planetenradsatz insbesondere vorteilhaft eine Übersetzung von i=1 realisiert werden. Vorzugsweise kann der Planetenradsatz dadurch vorteilhaft überbrückt werden.

Ferner wird vorgeschlagen, dass das Bremselement zu einem Bremsen des zweiten, als Sonnenrad ausgebildeten Getriebeelements des Planetenradsatzes vorgesehen ist. Vorzugsweise ist dazu das drehbare Kopplungselement des Bremselements permanent drehfest mit dem zweiten Getriebeelement verbunden. Dadurch kann insbesondere eine vorteilhafte Übersetzung erreicht werden.

Des Weiteren wird vorgeschlagen, dass das dritte Getriebeelement des Planetenradsatzes von einem Sonnenrad gebildet ist und permanent drehfest dem Hohlrad des Achsgetriebes verbunden ist. Dadurch kann insbesondere eine vorteilhaft kompakte Anordnung der Getriebevorrichtung erreicht werden. Ferner kann dadurch insbesondere eine vorteilhafte Momenteneinleitung auf das Achsgetriebe erreicht werden. Es kann insbesondere eine vorteilhafte Anordnung des Achsgetriebes innerhalb des Sonnenrads erreicht werden. Hierdurch kann eine vorteilhaft schmalbauende Getriebevorrichtung bereitgestellt werden.

Es wird ferner vorgeschlagen, dass das dritte Getriebeelement des Planetenradsatzes einstückig mit dem Hohlrad des Achsgetriebes ausgebildet ist. Vorzugsweise sind das als Planetendifferential ausgebildete Achsgetriebe und der Planetenradsatz gestapelt angeordnet. Bevorzugt sind das dritte, insbesondere als Sonnenrad ausgebildete Getriebeelement und das Hohlrad des Achsgetriebes ein einziges Rad. Dadurch kann insbesondere eine vorteilhaft kompakte Anordnung der Getriebevorrichtung erreicht werden. Ferner kann dadurch eine Anzahl von Bauteilen gering gehalten werden.

Es wird weiter vorgeschlagen, dass das Bremselement zu einem Bremsen des zweiten, als Planetenradträger ausgebildeten Getriebeelements des Planetenradsatzes vorgesehen ist. Dadurch kann insbesondere eine vorteilhafte Übersetzung erreicht werden. Es kann insbesondere eine Drehrichtungsumkehr realisiert werden. Hierdurch kann insbesondere ein mechanischer Rückwärtsgang bereitgestellt werden.

Zudem wird vorgeschlagen, dass das Verblockungselement zu einem Verblocken des ersten, als Hohlrad ausgebildeten Getriebeelements des Planetenradsatzes und des dritten, als Sonnenrad ausgebildeten Getriebeelements des Planetenradsatzes vorgesehen ist. Vorzugsweise ist ein Kopplungselement des Verblockungselements permanent drehfest mit dem ersten Getriebeelement verbunden und ein Kopplungselement des Verblockungselements permanent drehfest mit dem dritten Getriebeelement verbunden. Dadurch kann mittels dem Planetenradsatz insbesondere vorteilhaft eine Übersetzung von i=1 realisiert werden. Vorzugsweise kann der Planetenradsatz dadurch vorteilhaft überbrückt werden.

Die Begriffe "axial" und "radial" sind in diesem Zusammenhang insbesondere auf eine Hauptrotationsachse der Getriebevorrichtung bezogen, so dass der Ausdruck "axial" insbesondere eine Richtung bezeichnet, die parallel oder koaxial zu der Hauptrotationsachse verläuft. Ferner bezeichnet der Ausdruck "radial" im Folgenden insbesondere eine Richtung, die senkrecht zu der Hauptrotationsachse verläuft.

Besonders vorteilhaft ist es, die erfindungsgemäße Getriebevorrichtung mit einem Elektromotor zu einem elektrischen Antriebsstrang zu kombinieren. Ein besonders kompakter elektrischer Antriebsstrang resultiert, wenn der Elektromotor und die Getriebevorrichtung derart angeordnet sind, dass ein koaxial zu einem Rotor des Elektromotors angeordnetes Elektromotorabtriebsrad mit der Außenverzahnung des ersten Hohlrades des Planetenradsatzes kämmt. Das Elektromotorabtriebsrad ist somit vorteilhaft in der Zahnradebene mit dem Planetensatz und dem Achsgetriebe angeordnet.

Weitere Vorteile ergeben sich aus der folgenden Figurenbeschreibung. In den Figuren sind zwei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugs mit einer Antriebseinheit und mit einer erfindungsgemäßen Getriebevorrichtung in einer schematischen Darstellung,
- Fig. 2: die erfindungsgemäße Getriebevorrichtung mit einem Achsgetriebe, mit einem Planetenradsatz, mit einem Bremselement und mit einem Verblockungselement in einer schematischen Darstellung und
- Fig. 3: eine alternative erfindungsgemäße Getriebevorrichtung mit einem Achsgetriebe, mit einem Planetenradsatz, mit einem Bremselement und mit einem Verblockungselement, kombiniert mit einem Elektromotor zu einem elektrischen Antriebsstrang, in einer schematischen Darstellung.

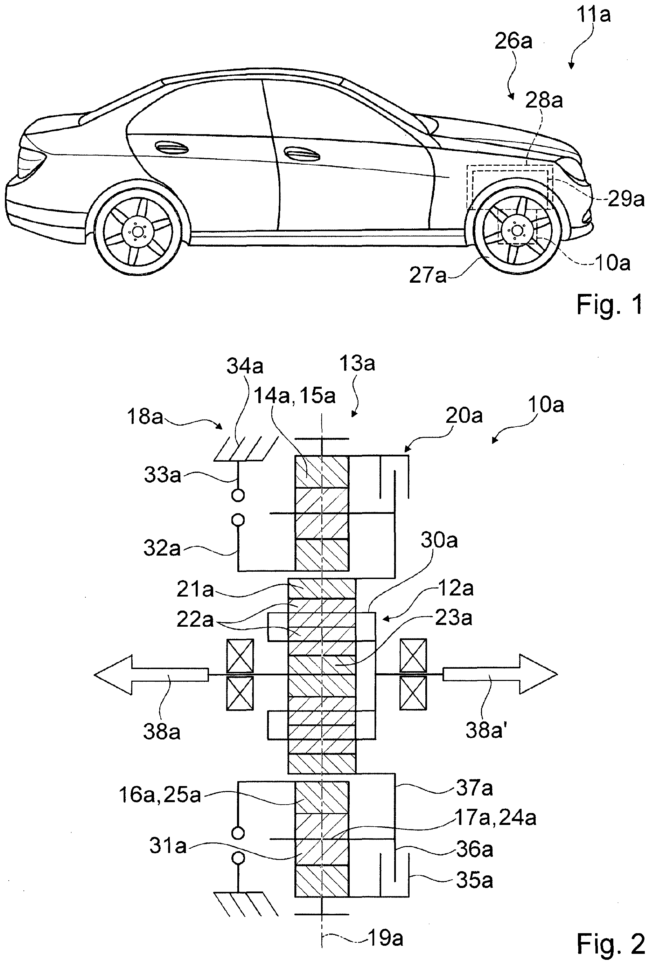

Die Figur 1 zeigt schematisch ein Kraftfahrzeug 11a. Das Kraftfahrzeug 11a ist beispielhaft von einem Hybrid-Kraftfahrzeug gebildet. Das Kraftfahrzeug 11a ist von einem frontgetriebenen Kraftfahrzeug 11a gebildet. Das Kraftfahrzeug 11a umfasst einen Antriebsstrang 26a, über welchen nicht weiter sichtbar Antriebsräder 27a des Kraftfahrzeugs 11a angetrieben werden. Der Antriebsstrang 26a umfasst eine Antriebseinheit 28a. Die Antriebseinheit 28a ist von einem Verbrennungsmotor gebildet. Die Antriebseinheit 28a ist quer eingebaut. Der Antriebsstrang 26a ist quer eingebaut. Die Antriebseinheit 28a ist quer zu einer vorgesehenen Geradeausfahrtrichtung eingebaut. Die Antriebseinheit 28a weist eine angetriebene Kurbelwelle auf. Die Kurbelwelle erstreckt sich senkrecht zu einer vorgesehenen Geradeausfahrtrichtung des Kraftfahrzeugs 11a. Ferner weist der Antriebsstrang 26a ein Mehrstufengetriebe 29a und eine dem Mehrstufengetriebe 29a nachgeschaltete Getriebevorrichtung 10a auf.

Die Getriebevorrichtung 10a weist ein Achsgetriebe 12a und einen Planetenradsatz 13a auf.

Der Planetenradsatz 13a weist drei Getriebeelemente 14a, 16a, 17a auf. Der Planetenradsatz 13a weist ein erstes von einem ersten Hohlrad 15a gebildetes Getriebeelement 14a auf. Das erste von dem ersten Hohlrad 15a gebildete Getriebeelement 14a weist zu einer Einleitung eines Antriebsmoments eine Außenverzahnung auf. Das erste von dem ersten Hohlrad 15a gebildete Getriebeelement 14a kämmt über die Außenverzahnung nicht weiter sichtbar mit dem Mehrstufengetriebe 29a. Ferner weist der Planetenradsatz 13a ein zweites Getriebeelement 16a auf. Das zweite Getriebeelement 16a ist von einem ersten Sonnenrad 25a des Planetenradsatzes 13a gebildet. Des Weiteren weist der Planetenradsatz 13a ein drittes Getriebeelement 17a auf. Das dritte Getriebeelement 17a ist von einem ersten Planetenradträger 24a gebildet. Das dritte Getriebeelement 17a ist mit dem Achsgetriebe 12a gekoppelt. Das dritte, als der erste Planetenradträger 24a ausgebildete Getriebeelement 17a des Planetenradsatzes 13a ist zu einer Momenteneinleitung mit dem Achsgetriebe 12a verbunden. Das dritte, als der erste Planetenradträger 24a ausgebildete Getriebeelement 17a des Planetenradsatzes 13a ist direkt mit dem Achsgetriebe 12a verbunden.

Das Achsgetriebe 12a ist abtriebsseitig mit dem Planetenradsatz 13a gekoppelt. Das Achsgetriebe 12a ist dazu vorgesehen, eine von der Antriebseinheit 28a auf die Getriebevorrichtung 10a übertragene Kraft auf Seitenwellen 38a, 38a' der Antriebsräder 27a des Kraftfahrzeugs 11a zu übertragen. Die Seitenwellen 38a, 38a' sind direkt mit den Antriebsrädern 27a verbunden. Das Achsgetriebe 12a ist von einem Differentialgetriebe gebildet. Das Achsgetriebe 12a ist als ein Planetendifferential ausgebildet, welches radial innerhalb des Planetenradsatzes 13a angeordnet ist. Das als Planetendifferential ausgebildete Achsgetriebe 12a ist im Wesentlichen in einer Ebene 19a mit dem Planetenradsatz 13a angeordnet. Das als Planetendifferential ausgebildete Achsgetriebe 12a und der Planetenradsatz 13a sind in einer Zahnradebene angeordnet. Das als Planetendifferential ausgebildete Achsgetriebe 12a weist ein zweites Hohlrad 21a, mehrere Doppelplaneten 22a und ein zweites Sonnenrad 23a auf. Ferner weist das als Planetendifferential ausgebildete Achsgetriebe 12a einen zweiten Planetenradträger 30a auf. Die Doppelplaneten 22a werden von dem zweiten Planetenradträger 30a auf einer Kreisbahn um das zweite Sonnenrad 23a geführt. Das zweite Sonnenrad 23a des Achsgetriebes 12a ist permanent drehfest mit der ersten Seitenwelle 38a verbunden. Der zweite Planetenradträger 30a des Achsgetriebes 12a ist permanent drehfest mit der zweiten Seitenwelle 38a' verbunden (Figur 2).

Das dritte Getriebeelement 17a des Planetenradsatzes 13a, das von dem ersten Planetenradträger 24a gebildet ist, ist permanent drehfest mit dem zweiten Hohlrad 21a des Achsgetriebes 12a verbunden. Das dritte, als erster Planetenradträger 24a ausgebildete Getriebeelement 17a des Planetenradsatzes 13a ist über ein Verbindungselement 37a permanent drehfest mit dem zweiten Hohlrad 21a des Achsgetriebes 12a verbunden. Ferner umfasst der Planetenradsatz 13a mehrere, von dem dritten, als erstem Planetenradträger 24a ausgebildeten Getriebeelement 17a auf einer Kreisbahn um das zweite, als erstes Sonnenrad 25a ausgebildete Getriebeelement 16a geführte Planetenräder 31a. Die Planetenräder 31a kämmen jeweils mit dem zweiten, als erstes Sonnenrad 25a ausgebildeten Getriebeelement 16a und mit dem ersten, als erstes Hohlrad 15a ausgebildeten Getriebeelement 14a. Der Planetenradsatz 13a ist vorteilhaft von einem Einfachplanetenradsatz gebildet. Grundsätzlich wäre jedoch auch denkbar, dass der Planetenradsatz 13a von einem Doppelplanetenradsatz gebildet ist. Durch einen Doppelplanetenradsatz könnte insbesondere eine Übersetzung ins Schnelle erreicht werden. Ferner wären dabei in einem gebremsten Zustand insbesondere Übersetzungen von i=0,3 bis i=0,75 möglich.

Ferner weist die Getriebevorrichtung 10a ein Bremselement 18a auf. Das Bremselement 18a ist von einer Schalteinheit gebildet. Das Bremselement 18a ist zu einem Festbremsen zumindest eines der Getriebeelemente 14a, 16a, 17a des Planetenradsatzes 13a vorgesehen. Das Bremselement 18a ist zu einem Bremsen des zweiten, als erstem Sonnenrad 25a ausgebildeten Getriebeelements 16a des Planetenradsatzes 13a vorgesehen. Das Bremselement 18a ist zu einem Festbremsen des zweiten, als erstem Sonnenrad 25a ausgebildeten Getriebeelements 16a vorgesehen. Das Bremselement 18a weist dazu ein erstes, drehbares Kopplungselement 32a auf, welches permanent drehfest mit dem zweiten, als erstem Sonnenrad 25a ausgebildeten Getriebeelement 16a verbunden ist. Ferner weist das Bremselement 18a ein zweites Kopplungselement 33a auf, welches drehfest mit einem Getriebegehäuse 34a der Getriebevorrichtung 10a verbunden ist. Das erste, drehbare Kopplungselement 32a ist in einem geöffneten Zustand des Bremselements 18a unabhängig von dem Getriebegehäuse 34a verdrehbar und in einem geschlossenen Zustand mit dem drehfest mit dem Getriebegehäuse 34a verbundenen, zweiten Kopplungselement 33a drehfest verbunden. Das Bremselement 18a ist als Klauenschaltelement ausgeführt. Grundsätzlich wäre jedoch auch eine andere, einem Fachmann als sinnvoll erscheinende Ausführung denkbar. In einem gebremsten Zustand kann mittels der Getriebevorrichtung 10a insbesondere eine Übersetzung von i=1,7 bis i=1,25 erreicht werden.

Des Weiteren weist die Getriebevorrichtung 10a ein Verblockungselement 20a auf. Das Verblockungselement 20a ist zu einem Verblocken von zumindest zwei Getriebeelementen 14a, 16a, 17a des Planetenradsatzes 13a miteinander vorgesehen. Das Verblockungselement 20a ist zu einem Verblocken des ersten, als erstes Hohlrad 15a ausgebildeten Getriebeelements 14a des Planetenradsatzes 13a und des dritten, als erstem Planetenradträger 24a ausgebildeten Getriebeelements 17a des Planetenradsatzes 13a vorgesehen. Das Verblockungselement 20a ist von einer Kupplung gebildet. Das Verblockungselement 20a weist ein erstes Kopplungselement 35a auf, welches permanent drehfest mit dem ersten, als erstes Hohlrad 15a ausgebildeten Getriebeelement 14a verbunden ist und ein zweites Kopplungselement 36a, welches permanent drehfest mit dem dritten, als erstem Planetenradträger 24a ausgebildeten Getriebeelement 17a verbunden ist. Das zweites Kopplungselement 36a ist permanent drehfest mit dem Verbindungselement 37a verbunden. Das zweites Kopplungselement 36a und das Verbindungselement 37a sind einstückig ausgebildet. Die Kopplungselemente 35a, 36a des Verblockungselements 20a sind über einen Aktuator verbindbar und trennbar. Das Verblockungselement 20a kann grundsätzlich zwischen zwei beliebigen Getriebeelementen 14a, 16a, 17a des Planetenradsatzes 13a angekoppelt werden. Entscheidend für die Position ist insbesondere eine möglichst platzsparende Anordnung und die gewünschten Drehzahl-/Drehmomentbelastungen im offenen/geschlossenen Zustand. In einem geschlossenen Zustand des Verblockungselements 20a weist die Getriebevorrichtung 10a eine Übersetzung von i=1 auf.

Grundsätzlich wäre denkbar, dass das Bremselement 18a und das Verblockungselement 20a über den gleichen Aktuator geschaltet werden, wie beispielsweise mittels einer doppelseitigen Synchronisierung. Damit wäre die Umschaltung wie bei einem Handschaltgetriebe nur lastfrei möglich.

Das erste Hohlrad 15a ist mit dem Finaldriverad verbunden und integriert und kann dadurch nahezu bauraumneutral untergebracht werden. Das erste Hohlrad 15a nimmt im Wesentlichen die Position des Finaldriverades ein. Der erste Planetenradträger 24a dient als Abtrieb und ist mit der Summenwelle des Planetendifferentials, also dem zweiten Hohlrad 21a, fest gekoppelt. Das erste Sonnenrad 25a ist über das Bremselement 18a mit dem Getriebegehäuse 34a verbindbar um eine Übersetzung ins Kurze darzustellen. Mit dem Verblockungselement 20a wird der Planetenradsatz 13a für den i=1 Betrieb überbrückt und verursacht keine zusätzlichen Verluste. Damit können im Finaldriverad zwei Gänge, insbesondere je nach Schaltelementanwendung lastschaltbar, geschaltet werden.

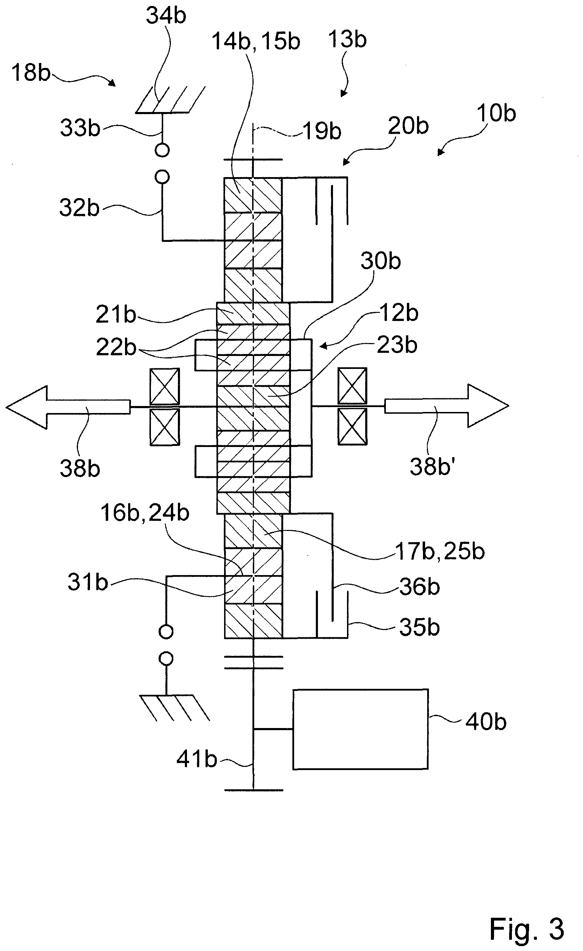

In Figur 3 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des ersten Ausführungsbeispiels der Figuren 1 und 2, verwiesen werden kann. Zur Unterscheidung der Ausführungsbeispiele ist der Buchstabe a in den Bezugszeichen des Ausführungsbeispiels der Figuren 1 und 2 durch den Buchstaben b in den Bezugszeichen des Ausführungsbeispiels der Figur 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels der Figuren 1 und 2 verwiesen werden.

Figur 3 zeigt eine Getriebevorrichtung 10b. Die Getriebevorrichtung 10b weist ein Achsgetriebe 12b und einen Planetenradsatz 13b auf. Das Achsgetriebe 12b ist abtriebsseitig mit dem Planetenradsatz 13b gekoppelt. Das Achsgetriebe 12b ist als ein Planetendifferential ausgebildet, welches radial innerhalb des Planetenradsatzes 13b angeordnet ist. Das als Planetendifferential ausgebildete Achsgetriebe 12b weist ein zweites Hohlrad 21b, mehrere Doppelplaneten 22b und ein zweites Sonnenrad 23b auf. Ferner weist das als Planetendifferential ausgebildete Achsgetriebe 12b einen zweiten Planetenradträger 30b auf.

Der Planetenradsatz 13b weist drei Getriebeelemente 14b, 16b, 17b auf. Der Planetenradsatz 13b weist ein erstes von einem ersten Hohlrad 15b gebildetes Getriebeelement 14b auf. Das erste von dem ersten Hohlrad 15b gebildete Getriebeelement 14b weist zu einer Einleitung eines Antriebsmoments eine Außenverzahnung auf. Ferner weist der Planetenradsatz 13b ein zweites Getriebeelement 16b auf. Das zweite Getriebeelement 16b ist von einem ersten Planetenradträger 24b des Planetenradsatzes 13b gebildet. Ferner umfasst der Planetenradsatz 13b mehrere, von dem zweiten, als erstem Planetenradträger 24b ausgebildeten Getriebeelement 16b auf einer Kreisbahn um das zweite, als einem ersten Sonnenrad 25b ausgebildete Getriebeelement 16b geführte Planetenräder 31b. Des Weiteren weist der Planetenradsatz 13b ein drittes Getriebeelement 17b auf. Das dritte Getriebeelement 17b ist von dem ersten Sonnenrad 25b gebildet. Das dritte Getriebeelement 17b ist mit dem Achsgetriebe 12b gekoppelt. Das dritte, als erstem Sonnenrad 25b ausgebildete Getriebeelement 17b des Planetenradsatzes 13b ist zu einer Momenteneinleitung mit dem Achsgetriebe 12b verbunden. Das dritte, als erstes Sonnenrad 25b ausgebildete Getriebeelement 17b des Planetenradsatzes 13b ist direkt mit dem Achsgetriebe 12b verbunden. Das dritte Getriebeelement 17b des Planetenradsatzes 13b, das von dem ersten Sonnenrad 25b gebildet ist, ist permanent drehfest mit dem zweiten Hohlrad 21b des Achsgetriebes 12b verbunden. Das dritte Getriebeelement 17b des Planetenradsatzes 13b ist einstückig mit dem zweiten Hohlrad 21b des Achsgetriebes 12b ausgebildet. Das als Planetendifferential ausgebildete Achsgetriebe 12b und der Planetenradsatz 13b sind gestapelt angeordnet. Bevorzugt sind das dritte, als erstes Sonnenrad 25b ausgebildete Getriebeelement 17b und das zweite Hohlrad 21b des Achsgetriebes 12b ein einziges Rad. Der Planetenradsatz 13b ist von einem Einfachplanetenradsatz gebildet. Grundsätzlich wäre jedoch auch denkbar, dass der Planetenradsatz 13b von einem Doppelplanetenradsatz gebildet ist. Durch einen Doppelplanetenradsatz könnte insbesondere eine Übersetzung ins Schnelle erreicht werden. Ferner wären dabei in einem gebremsten Zustand insbesondere Übersetzungen von i=0,7 bis i=0,25 möglich.

Ferner weist die Getriebevorrichtung 10b ein Bremselement 18b auf. Das Bremselement 18b ist von einer Schalteinheit gebildet. Das Bremselement 18b ist zu einem Festbremsen zumindest eines der Getriebeelemente 14b, 16b, 17b des Planetenradsatzes 13b vorgesehen. Das Bremselement 18b ist zu einem Bremsen des zweiten, als erstem Planetenradträger 24b ausgebildeten Getriebeelements 16b des Planetenradsatzes 13b vorgesehen. Das Bremselement 18b ist zu einem Festbremsen des zweiten, als erstem Planetenradträger 24b ausgebildeten Getriebeelements 16b vorgesehen. Das Bremselement 18b weist dazu ein erstes, drehbares Kopplungselement 32b auf, welches permanent drehfest mit dem zweiten, als erstem Planetenradträger 24b ausgebildeten Getriebeelement 16b verbunden ist. Ferner weist das Bremselement 18b ein zweites Kopplungselement 33b auf, welches drehfest mit einem Getriebegehäuse 34b der Getriebevorrichtung 10b verbunden ist. Das erste, drehbare Kopplungselement 32b ist in einem geöffneten Zustand des Bremselements 18b unabhängig von dem Getriebegehäuse 34b verdrehbar und in einem geschlossenen Zustand mit dem drehfest mit dem Getriebegehäuse 34b verbundenen, zweiten Kopplungselement 33b drehfest verbunden. In einem gebremsten Zustand erfolgt eine Drehrichtungsumkehr und mittels der Getriebevorrichtung 10b können Übersetzungen von i=-0,7 bis i=-0,25 erreicht werden.

Des Weiteren weist die Getriebevorrichtung 10b ein Verblockungselement 20b auf. Das Verblockungselement 20b ist zu einem Verblocken von zumindest zwei Getriebeelementen 14b, 16b, 17b des Planetenradsatzes 13b miteinander vorgesehen. Das Verblockungselement 20b ist zu einem Verblocken des ersten, als erstes Hohlrad 15b ausgebildeten Getriebeelements 14b des Planetenradsatzes 13b und des dritten, als erstem Sonnenrad 25b ausgebildeten Getriebeelements 17b des Planetenradsatzes 13b vorgesehen. Das Verblockungselement 20b ist von einer Kupplung gebildet. Das Verblockungselement 20b weist ein erstes Kopplungselement 35b auf, welches permanent drehfest mit dem ersten, als erstes Hohlrad 15b ausgebildeten Getriebeelement 14b verbunden ist und ein zweites Kopplungselement 36b, welches permanent drehfest mit dem dritten, als erstem Sonnenrad 25b ausgebildeten Getriebeelement 17b verbunden ist. In einem geschlossenen Zustand des Verblockungselements 20b weist die Getriebevorrichtung 10b eine Übersetzung von i=1 auf.

Durch die Getriebevorrichtung 10b kann ein mechanischer Rückwärtsgang realisiert werden. Durch die Ankopplungsmöglichkeit des zweiten, als erstem Planetenradträger 24b ausgebildeten Getriebeelements 16b mit dem Getriebegehäuse 34b, kann eine Drehrichtungsumkehr erzielt werden. Dabei ist besonders vorteilhaft, dass der Abtrieb über das dritte, als erstes Sonnenrad 25b ausgebildete Getriebeelement 17b des äußeren Radsatzes erfolgt, welcher auch gleichzeitig das zweite Hohlrad 21b des Achsgetriebes 12b ist. Dadurch ist die Ankopplung besonders platzsparend. Mit dieser Variante kann der Rückwärtsgang im Grundgetriebe, insbesondere im Mehrstufengetriebe, entfallen und wird durch Umschaltung in der Getriebevorrichtung 10b realisiert. Auch hier kann das Verblockungselement 20b zwischen zwei beliebigen Elementen des Planetenradsatzes 13b angekoppelt werden.

Vorteilhaft kann, wie in Fig. 3 dargestellt, die Getriebevorrichtung (10b) mit einem Elektromotor (40) zu einem elektrischen Antriebsstrang für ein Elektrofahrzeug kombiniert werden, wobei besonders vorteilhaft ein koaxial zu einem nicht dargestellten Rotor des Elektromotors (40b) angeordnetes Elektromotorabtriebszahnrad (41b) derart angeordnet ist, dass es mit der Außenverzahnung des ersten Hohlrades (15b) kämmt und in der Zahnradebene (19b) mit dem Planetenradsatz (13b) und dem Achsgetriebe (12b) angeordnet ist. Der Elektromotor kann selbstverständlich in gleicher Weise mit dem Ausführungsbeispiel der Fig. 2 kombiniert werden.

### Bezugszeichenliste

- 10: Getriebevorrichtung
- 11: Kraftfahrzeug
- 12: Achsgetriebe
- 13: Planetenradsatz
- 14: Getriebeelement
- 15: erstes Hohlrad
- 16: Getriebeelement
- 17: Getriebeelement
- 18: Bremselement
- 19: Zahnradebene
- 20: Verblockungselement
- 21: zweites Hohlrad
- 22: Doppelplaneten
- 23: zweites Sonnenrad
- 24: erster Planetenradträger
- 25: erstes Sonnenrad
- 26: Antriebsstrang
- 27: Antriebsrad
- 28: Antriebseinheit
- 29: Mehrstufengetriebe
- 30: zweiter Planetenradträger
- 31: Planetenrad
- 32: Kopplungselement
- 33: Kopplungselement
- 34: Getriebegehäuse
- 35: Kopplungselement
- 36: Kopplungselement
- 37: Verbindungselement
- 38: Seitenwelle
- 40: Elektromotor
- 41: Elektromotorabtriebszahnrad

## Patentansprüche

1. Getriebevorrichtung (10a; 10b) für ein Kraftfahrzeug (11a), mit einem Achsgetriebe (12a; 12b), mit einem Planetenradsatz (13a; 13b), welcher zumindest ein erstes von einem ersten Hohlrad (15a; 15b) gebildetes Getriebeelement (14a; 14b), das zu einer Einleitung eines Antriebsmoments eine Außenverzahnung aufweist, zumindest ein zweites Getriebeelement (16a; 16b) und zumindest ein drittes Getriebeelement (17a; 17b) aufweist, das mit dem Achsgetriebe (12a; 12b) gekoppelt ist, und mit zumindest einem Bremselement (18a; 18b), welches zu einem Festbremsen zumindest eines der Getriebeelemente (14a, 16a, 17a; 14b, 16b, 17b) des Planetenradsatzes (13a; 13b) vorgesehen ist, wobei das Achsgetriebe (12; 12b) radial innerhalb des Planetenradsatzes (13a; 13b) angeordnet ist,
**dadurch gekennzeichnet, dass**
das Achsgetriebe (12a; 12b) als ein Planetendifferential mit einem zweiten Hohlrad (21a, 21b), einem zweiten Sonnenrad (23a, 23b) und einem zweiten Planetenradträger (30a, 30b) ausgebildet ist und in einer Zahnradebene (19a; 19b) mit dem Planetenradsatz (13a; 13b) angeordnet ist.

2. Getriebevorrichtung (10a; 10b) nach Anspruch 1,
**gekennzeichnet durch**
ein Verblockungselement (20a; 20b), welches zu einem Verblocken von zumindest zwei Getriebeelementen (14a, 16a, 17a; 14b, 16b, 17b) des Planetenradsatzes (13a; 13b) miteinander vorgesehen ist.

3. Getriebevorrichtung (10a; 10b) nach Anspruch 1 oder 2,
**dadurch gekennzeichnet, dass**
das als Planetendifferential ausgebildete Achsgetriebe (12a; 12b) einen Doppelplaneten (22a; 22b) aufweist.

4. Getriebevorrichtung (10a) nach einem der vorhergehenden Ansprüche,
**dadurch gekennzeichnet, dass**
das dritte Getriebeelement (17a) des Planetenradsatzes (13a) von einem ersten Planetenradträger (24a) gebildet ist und permanent drehfest mit dem zweiten Hohlrad (21a) des Achsgetriebes (12a) verbunden ist.

5. Getriebevorrichtung (10a) nach Anspruch 2,
**dadurch gekennzeichnet, dass**
das Verblockungselement (20a) zu einem Verblocken des ersten, als erstes Hohlrad (15a) ausgebildeten Getriebeelements (14a) des Planetenradsatzes (13a) und des dritten Getriebeelements (17a) des Planetenradsatzes (13a) vorgesehen ist.

6. Getriebevorrichtung (10a) nach einem der vorhergehenden Ansprüche,
**dadurch gekennzeichnet, dass**
das Bremselement (18a) zu einem Bremsen des zweiten, als Sonnenrad (25a) ausgebildeten Getriebeelements (16a) des Planetenradsatzes (13a) vorgesehen ist.

7. Getriebevorrichtung (10b) nach einem der Ansprüche 1 bis 3,
**dadurch gekennzeichnet, dass**
das dritte Getriebeelement (17b) des Planetenradsatzes (13b) von einem ersten Sonnenrad (25b) gebildet ist und permanent drehfest mit dem zweiten Hohlrad (21b) des Achsgetriebes (12b) verbunden ist.

8. Getriebevorrichtung (10b) nach Anspruch 7,
**dadurch gekennzeichnet, dass**
das dritte Getriebeelement (17b) des Planetenradsatzes (13b) einstückig mit dem zweiten Hohlrad (21b) des Achsgetriebes (12b) ausgebildet ist.

9. Getriebevorrichtung (10b) nach Anspruch 7,
**dadurch gekennzeichnet, dass**
das Bremselement (18b) zu einem Bremsen des zweiten, als erstem Planetenradträger (24b) ausgebildeten Getriebeelements (16b) des Planetenradsatzes (13b) vorgesehen ist.

10. Getriebevorrichtung (10b) nach Anspruch 2 und 7,
**dadurch gekennzeichnet, dass**
das Verblockungselement (20b) zu einem Verblocken des ersten, als erstes Hohlrad (15b) ausgebildeten Getriebeelements (14b) des Planetenradsatzes (13b) und des dritten, als das erste Sonnenrad (25b) ausgebildeten Getriebeelements (17b) des Planetenradsatzes (13b) vorgesehen ist.

11. Elektrischer Antriebsstrang mit einer Getriebevorrichtung (10a; 10b) nach einem der vorhergehenden Ansprüche,
**gekennzeichnet durch** einen Elektromotor (40b), welcher ein koaxial zu einem Rotor des Elektromotors (40b) angeordnetes Elektromotorabtriebszahnrad (41b) aufweist, welches mit der Außenverzahnung des ersten Hohlrades (15a; 15b) kämmt und welches in der Zahnradebene (19a; 19b) mit dem Planetenradsatz (13a; 13b) und dem Achsgetriebe (12a; 12b) angeordnet ist.

## Claims

1. Transmission device (10a; 10b) for a motor vehicle (11a), comprising an axle drive (12a; 12b), comprising a planetary gear set (13a, 13b), which has at least one first transmission element (14a; 14b) formed by a first ring gear (15a; 15b) and having external toothing for introducing a drive torque, at least one second transmission element (16a; 16b) and at least one third transmission element (17a; 17b), which is coupled to the axle drive (12a; 12b), and comprising at least one brake element (18a; 18b), which is provided for braking at least one of the transmission elements (14a, 16a, 17a; 14b, 16b, 17b) of the planetary gear set (13a; 13b) to a standstill, wherein the axle drive (12; 12b) is arranged radially inside the planetary gear set (13a; 13b), **characterised in that** the axle drive (12a; 12b) is designed as a planetary differential comprising a second ring gear (21a, 21b), a second sun gear (23a, 23b) and a second planet carrier (30a, 30b) and is arranged in a gearwheel plane (19a; 19b) with the planetary gear set (13a; 13b).

2. Transmission device (10a; 10b) according to claim 1, **characterised by** an interlocking element (20a; 20b), which is provided for interlocking at least two transmission elements (14a, 16a, 17a; 14b, 16b, 17b) of the planetary gear set (13a; 13b).

3. Transmission device (10a; 10b) according to claim 1 or 2, **characterised in that** the axle drive (12a; 12b) designed as a planetary differential comprises a double planet (22a; 22b).

4. Transmission device (10a) according to any of the preceding claims, **characterised in that** the third transmission element (17a) of the planetary gear set (13a) is formed of a first planet carrier (24a) and is permanently connected to the second ring gear (21a) of the axle drive (12a) for conjoint rotation therewith.

5. Transmission device (10a) according to claim 2, **characterised in that** the interlocking element (20a) is provided for interlocking the first transmission element (14a) of the planetary gear set (13a) designed as the first ring gear (15a) and the third transmission element (17a) of the planetary gear set (13a).

6. Transmission device (10a) according to any of the preceding claims, **characterised in that** the brake element (18a) is provided for braking the second transmission element (16a) of the planetary gear set (13a) designed as a sun gear (25a).

7. Transmission device (10b) according to any of claims 1 to 3, **characterised in that** the third transmission element (17b) of the planetary gear set (13b) is formed of a first sun gear (25b) and is permanently connected to the second ring gear (21b) of the axle drive (12b) for conjoint rotation therewith.

8. Transmission device (10b) according to claim 7, **characterised in that** the third transmission element (17b) of the planetary gear set (13b) is integrally formed with the second ring gear (21b) of the axle drive (12b).

9. Transmission device (10b) according to claim 7, **characterised in that** the brake element (18b) is provided for braking the second transmission element (16b) of the planetary gear set (13b) designed as the first planet carrier (24b).

10. Transmission device (10b) according to claim 2 and 7, **characterised in that** the interlocking element (20b) is provided for interlocking the first transmission element (14b) of the planetary gear set (13b) designed as the first ring gear (15b) and the third transmission element (17b) of the planetary gear set (13b) designed as the first sun gear (25b).

11. Electric drive train comprising a transmission device (10a; 10b) according to any of the preceding claims,
**characterised by** an electric motor (40b), which comprises an electric motor driven gearwheel (41b) that is arranged coaxially with a rotor of the electric motor (40b), meshes with the external toothing of the first ring gear (15a; 15b) and is arranged in the gearwheel plane (19a; 19b) with the planetary gear set (13a; 13b) and the axle drive (12a; 12b).

## Revendications

1. Ensemble boîte de vitesses (10a, 10b) pour un véhicule à moteur (11a), comprenant une transmission finale (12a, 12b), comprenant un train planétaire (13a, 13b) lequel comprenant au moins un premier élément de transmission (14a, 14b) formé par une première couronne (15a, 15b) qui présente une denture extérieure pour lancer un moment d'entraînement, au moins un deuxième élément de transmission (16a, 16b) et au moins un troisième élément de transmission (17a, 17b) qui est accouplé à la transmission finale (12a, 12b), et comprenant au moins un élément de frein (18a, 18b), qui est prévu pour un frein de stationnement d'au moins un des éléments de transmission (14a, 16a, 17a, 14b, 16b, 17b) du train planétaire (13a, 13b), la transmission finale (12a, 12b) étant disposée radialement à l'intérieur du train planétaire (13a, 13b),
**caractérisé en ce que**
la transmission finale (12a, 12b) étant conçue sous la forme d'un différentiel planétaire doté d'une seconde couronne (21a, 21b), d'un pignon planétaire (23a, 23b) et d'un second support de pignon planétaire (30a, 30b) et est disposée dans un plan de roue dentée (19a, 19b) avec le train planétaire (13a, 13b).

2. Ensemble boîte de vitesses (10a, 10b) selon la revendication 1, **caractérisé par** un élément de blocage (20a, 20b) qui sert à bloquer au moins deux éléments de transmission (14a, 16a, 17a, 14b, 16b, 17b) du train planétaire (13a, 13b) l'un avec l'autre.

3. Ensemble boîte de vitesses (10a, 10b) selon la revendication 1 ou la revendication 2, **caractérisé en ce que** la transmission finale (12a, 12b) conçue sous la forme de différentiel planétaire présente un double pignon planétaire (22a, 22b).

4. Ensemble boîte de vitesses (10a, 10b) selon l'une quelconque des revendications précédentes, **caractérisé en ce que** le troisième élément de transmission (17a) du train planétaire (13a) est formé d'un premier support de pignon planétaire (24a) et est relié solidaire en rotation en permanence à la seconde couronne (21a) de la transmission finale (12a).

5. Ensemble boîte de vitesses (10a, 10b) selon la revendication 2, **caractérisé en ce que** l'élément de blocage (20a) sert à bloquer le premier élément de transmission (14a) du train planétaire (13a) conçu sous la forme de la première couronne (15a) et au blocage du troisième élément de transmission (17a) du train planétaire (13a).

6. Ensemble boîte de vitesses (10a, 10b) selon l'une quelconque des revendications précédentes, **caractérisé en ce que** l'élément de frein (18a) sert au freinage du deuxième élément de transmission (16a) du train planétaire (13a) conçu sous la forme d'un pignon planétaire (25a).

7. Ensemble boîte de vitesses (10a, 10b) selon l'une quelconque des revendications 1 à 3, **caractérisé en ce que** le troisième élément de transmission (17b) du train planétaire (13b) est conçu sous la forme du premier pignon planétaire (25b) et est relié solidaire en permanence en rotation à la seconde couronne (21b) de la transmission finale (12b).

8. Ensemble boîte de vitesses (10a, 10b) selon la revendication 7, **caractérisé en ce que** le troisième élément de transmission (17b) du train planétaire (13b) est conçu d'un seul tenant avec la seconde couronne (21b) de la transmission finale (12b).

9. Ensemble boîte de vitesses (10a, 10b) selon la revendication 7, **caractérisé en ce que** l'élément de frein (18b) sert au freinage du deuxième élément de transmission (16b) du train planétaire (13b), ledit élément étant conçu comme premier support de pignon planétaire (24b).

10. Ensemble boîte de vitesses (10a, 10b) selon la revendication 2 et 7, **caractérisé en ce que** l'élément de blocage (20b) sert au blocage du premier élément de transmission (14b) du train planétaire (13b), ledit élément étant conçu comme la première couronne (15b), et au blocage du troisième élément de transmission (17b) du train planétaire (13b), ledit troisième élément étant conçu comme le premier pignon planétaire (25b).

11. Chaîne cinématique électrique comprenant un Ensemble boîte de vitesses (10a, 10b) selon l'une quelconque des revendications précédentes, **caractérisée par** un moteur électrique (40b) qui présente une roue dentée menée de moteur électrique (41b) disposée coaxialement à un rotor du moteur électrique (40b), laquelle s'engrène avec la denture extérieure de la première couronne (15a, 15b) et laquelle est disposée dans le plan de roue dentée (19a, 19b) avec le train planétaire (13a, 13b) et avec la transmission finale (12a, 12b).
